# NEUE EUROPÄISCHE PATENTSCHRIFT

(11) **EP 0 573 907 B2**
(45) Veröffentlichungstag und Bekanntmachung des Hinweises auf die Entscheidung über den Einspruch: **28.06.2000**
(45) Hinweis auf die Patenterteilung: 06.08.1997
(21) Anmeldenummer: 93108982.5
(22) Anmeldetag: 04.06.1993
(51) Int. Cl.: B29C 47/92, B29C 47/90

(54) **Extruder mit Wanddickenmessvorrichtung**
Extruder with wall thickness measuring device
Extrudeuse avec dispositif de mesure de l'épaississant

(30) Priorität: 10.06.1992 DE 4218910; 28.10.1992 DE 4236360; 16.02.1993 DE 4304687
(43) Veröffentlichungstag der Anmeldung: 15.12.1993
(73) Patentinhaber: CONPRO GmbH, D-32602 Vlotho (DE)
(72) Erfinder: Neumann, Ulrich, W-4970 Bad Oeynhausen (DE)
(74) Vertreter: Müller, Karl-Ernst, Dr., Dipl.-Ing.

(56) Entgegenhaltungen:
- EP-A- 0 385 285
- EP-A- 0 425 944
- WO-A-90/10530
- DE-A- 1 148 736
- DE-A- 1 928 012
- DE-A- 4 033 443
- US-A- 4 152 380
- US-A- 4 710 146
- MM Maschinenmarkt, Würzburg 86 (1980) 51, Seiten 1002 bis 1004

## Beschreibung

Die Erfindung betrifft eine Extrudieranlage für Kunststoffrohre, bestehend aus einem Extruder und einem daran anschließenden Vakuumtank mit einer darin angeordneten, in Richtung auf den Extruder vor den Vakuumtank vorstehenden und mit einer Wasserkühlung versehenen Kalibrierhülse, weiche das extrudierte Rohr gegen die Innenseite ihrer Wandung zieht, wobei dem verderen Ende der Kalibrierhülse ein ringförmiger Kühlraum zugeordnet ist, und eine mit einem oder mehreren radial zum extrudierten Rohr ausgerichteten nach dem Ultraschallprinzip arbeitenden Meßköpfen aufweisende Wanddickenmeßvorrichtung in dem vorstehenden Bereich der Kalibrierhülse außerhalb des Vakuumtanks angeordnet ist.

Eine Extrudieranlage mit den vorgenannten Merkmalen ist in der US-A-4 740 146 beschrieben; bel der daraus bekannten Anlage ist eine Kalibrierhülse als doppelwandiger, von dem Vakuumtank in Richtung auf den Extruder hervorstehendor Aufsatzkörper am Einlauf in den Vakuumtank vorgesehen, wobei die Kalibrisrhülse mit einem geringen Teil in den eigentlichen Vakuumtank hineinragt. Der doppelwandige Aufsatzkörper ist nach innen zum Vakuumtank offen, so daß die im Vakuumtank befindliche Kühlflüssigkeit auch in dem Hohlraum des Aufsatzkörpers und die Kalbrierhülse umgebend ansteht. Im Bereich des Aufsatzkörpers und damit außerhalb des eigentlichen Vakuumtanks ist eine Wanddickenmeßvorrichtung mit einem oder mehreren radial zum extrudierten Rohr ausgerichteten, nach dem Ultraschallprinzip arbeitenden Meßköpfen angeordnet.

Mit der bekannten Extrudieranlage ist zwar schon eine Verringerung der Totzeit zwischen der Messung der Wanddicke des extrudierten Rohres und damit möglichen Feststellung von den Toleranzbereich überschreitenden Wanddickenabweichungen und einer sich daran anschließenden Korrektur der Einstellung des Extruders möglich, jedoch können mit einer derartigen Messung Fehler verbunden sein, weil das in dem Aufsatzkörper anstehende Kühlwasser nicht für eine ausreichende Abkühlung und damit für eine ausreichende Formstabilität des extrudierten Rohres im Bereich der Wanddickenmeßvorrichtung sorgt. Ein weiterer Nachteil ergibt sich daraus, daß aufgrund der Baueinheitichkeit von Kalibrierhülse und Aufsatzkörper die Kalibrierhülse nicht einfach ausgewechselt werden kann, sondern der Wechsel immer nur gemeinsam mit dem Aufsatzkörper und der darin integrierten Wanddickenmeßvorrichtung erfolgen kann.

Der Erfindung liegt daher die Aufgabe zugrunde, eine Extrudieranlage der gattungsgemäßen Art unter Vermeidung der vorgenannten Nachteile weiter zu verbessern.

Die Lösung dieser Aufgabe ergibt sich aus dem Patentanspruch 1.

Desweiteren wird die gestellte Aufgabe durch eine Extrudieranlage gemaß Patentanspruch 11 gelöst. Vorteilhafte Ausgestaltungen der Erfindung sind in den Unteransprüchen angegeben.

Bei der erfindungsgemäßen Meßstelle handelt es sich um die frühestmögliche Meßstelle für Wanddickenmessungen, weil unmittelbar nach dem Austritt aus dem Werkzeug das Rohr noch plastisch und leicht verformbar, also für Wanddickenmessungen nicht geeignet ist. Aus diesem Grunde ist zunächst der Intensivkühlring vorgesehen, um das Rohr vor Durchführung der Wanddickenmessung formstabil zu halten. Andererseits ist das Material an der erfindungsgemäß vorgesehenen Meßstelle in vorteilhafter Weise für Ultraschallmessungen noch ausreichend temperaturhomogen, da in der Regal vom Extrudiewerkzeug temperaturhomogenes Material der weiteren Kalibrierung und Kühlung zugeführt wird. Temperaturunterschiede am Kunststoffrohr, welche die Ultraschallmessung insbesondere in Querrichtung beeinflussen, treten erst im Kalibrier- und Kühlbereich auf, so daß diese für die Wanddickenmessung ungünstigen Einflüsse durch die Anordnung der Wanddickenmessung vor Eintritt in die Kalibrier-Kühlstrecke vermieden sind.

Mit der Erfindung ist weiterhin der Vorteil verbunden, daß aufgrund der nun verwirklichten frühestmöglichen Wanddickenmessung des extrudierten Rohres noch vor dem Durchlauf durch die Kalibierhülse die Fehlererkennung außerordentlich frühzeitig erfolgt, so daß mit äußerst geringer Totzeit eine Korrektur der Einstellung des Extruders, insbesondere der Zentrierung der Werkzeughülse um den Werkzeugdorn, möglich ist.

Schließlich ist mit der Erfindung der Vorteil verbunden, daß der apparative Aufwand für die Einrichtung der Wanddickenmessung äußerst gering ist, insbesonders soweit es nach Ausführungsbeispielen der Erfindung vorgesehen ist, die Wanddickenmessung drucklos, das heißt nicht unter Vakuum, durchzuführen. Bestehende Extrudieranlagen brauchen nur mit einem entsprechenden Vorbau vor dem Vakuumtank versehen zu werden. wobei die Lage der Wanddickenmeßvorrichtung auch für Justierungen und Reparaturen während des Betriebes günstig ist.

Nach einem Ausführungsbeispiel der Erfindung sind in dem Meßring in Axialrichtung der Kalibrierhülse verlaufende Bohrungen zum Anschluß des Intensivkühlringes an den Vakuumtank angeordnet. Damit ist eine ausreichende Versorgung des Intensivkühlringes trotz der Zwischenschaltung der Wanddickenmeßvorrichtung gewährleistet.

In einem ersten Ausführungsbeispiel der Wanddickenmeßvorrichtung ist der Meßring mit Öffnungen zur Aufnahme von auf seinem Umfang angeordneten Meßköpfen versehen, wobei die Kalibrierhülse mit zugeordneten Durchbrechungen versehen ist. Bel diesem Ausführungsbeispiel erfolgt die Messung über die stationär angeordneten Meßköpfe, wobei im Bereich des Meßringes die gleichen Bedingungen, nämlich Vakuum und Wasserumlauf vorherrschen, wie diese im Intensivkühlring gegeben sind.

Nach einem anderen Ausführungsbeispiel der Erfindung ist der vordere in dem Intensivkühlring gelegene Endbereich der Kalibrierhülse von dem im übrigen im Vakuumtank liegenden Hülsenkörper der Kalibrierhülse unter Ausbildung eines Zwiechenraumes abgetrennt, wobei der Meßring den Zwiechenraum überdeckend zwischen Vakuumtank und Intensivkühlring angeordnet ist. Eine solche Anordnung erlaubt in vorteilhaftar Weise die Anordnung eines oder mehrerer raversierend um das extrudierte Rohr umlaufender Maßkopfe, weil in dem Bereich des Meßringes das extrudierte Rohr mit seiner Oberfläche frei liegt. Da jedoch die Breite des Meßringes vergleichsweise gering ist, kann an dieser Stelle auf eine Stützung des extrudierten Rohres durchaus verzichtet werden. Alternativ zu einem reversierend angeoedneten Meßkopf ist auch die Anordung von stationären Moßköpfen möghich.

Nach einem Ausführungsbeispiel der Erfindung ist der Intensivkühlring gegen den Meßring und den Vakuumtank mittels einer Dichtung vakuum- und wasserdicht abgadichtet wobei der von dem Meßring umschlossene Zwischenraum mit Wasser gefüllt ist. Hiermit ist der besondere Vorteil verbunden, daß die Messung in dem Meßring unter Ausschluß von Vakuum, also drucklos erfolgt, wodurch die apparative Ausrüstung wesentlich vereinbart ist. Es versteht sich, daß der Meßring selbst Versorgungsbohrungen zur Überleilung von Wasser und Vakuum von dem Vakuumtank zum Intensivkühlring aufweist.

Schließlich ist nach einem Ausführungsbeispiel der Erfindung der von dem Meßring umschlossene Zwischenraum mit einer gesonderten Vakuumquelle verburden; so kann es je nach der Wanddicke des extrudierten Rohres und der Extrusionsgaschwindigkeit erforderlich sein, auch im Bereich des Meßringes mit Unteedruck zu arbeiten, wobei jedoch dieser Unterdruck geringer ist als das am Intensivkühlring und dem Vakuumtank anliegende Vakuum; dies gilt insbesondere dann, wenn im Intensivkühlring ein relativ hoher Unterdruck herrschen muß, um ein gleichmäßiges Anliegen des extrudierten Rohres an der Innenseite des entsprechanden Endes der Kalibrierhülse abzusichern und eine gleichmäßige Abkühlung sicherzustellen; bei einem entsprechenden Ansaugvorgang kann dann Luft mit angesaugt werden, wobei derartige Luftanteile für eine Ultraschallmessung nicht akzeptabel sind, so daß des Vakuum im Bereich des Meßringes zu reduzieren ist.

Soweit nach einem Ausführungsbeispiel der Erfindung im Anschluß an die Kalibrierhülse eine weitere Wanddickenmeßvorrichtung angeordnet und eine Auswerteeinheit zur Auswertung der Maßdaten beider Wanddickenmeßvorrichtungen vorgesehen ist. erlaubt eine solche Kombination von zwei Meßstellen eine äußerst präzise Steuerung des Extrudiervorganges. So erlaubt die Wanddickenmessung vor dem Eintritt des extrudierten Rohres in den Vakuumtank und ein Vergleich mit den von der hinter der Kalibrierhülse angeordneten Wanddickenmeßvorrichtung gewonnenen Daten eine Verbesserung der Qualitätsüberwachung. da aufgrund der frühzeitig ermittelten Meßwerte und Vergleich mit den nach der vollständigen Anskalibrierung des extrudierten Rohres gewonnenen Meßwerten überprüft werden kann, ob die Qualitätswerte durch unterschiedliche Abkühltemperaturen in Querrichtung des extrudierten Rohres über die Abkühlstrecke verfälscht werden.

Die Erfindung ist nicht auf die Wanddickenmessung bei einem runden Rohr beschränkt, sondern ist auch anwendbar auf profilierte Extrusionsstränge, deren Formgebung auch durch gleichermaßen profilierte Kalibrierhülsen Rechnung getagen ist. Bei derartigen profilierten Extrusionssträngen ist der zugeordnete Meßring dann entsprechend mit einer Rechteckform ausgebildet.

Mit der weiteren Ausführungsform einer Extrudieranlage gemäß dem unabhängigen Patentanspruch 11 ist der Vorteil verbunden, daß eine außerordentlich frühzeitige Lunkererkennung möglich ist, damit zu einem Zeitpunkt, in welchem die Lunker in dem noch weichen Rohr ausgeprägt und damit leicht festzustellen sind. Diese frühzeitige Fehlerkennung bringt es mit sich, daß mit äußerst geringer Totzeit eine Korrektur der Einstellung des Extruders zur Vermeidung dieser Lunker erfolgen kann.

Hierbei kann vorgesehen sein, daß der Meßkopt auf einem um das extrudierte Rohe rotierenden Trägerring angeordnet ist und daß dem rotierenden Trägeering zur Signalübermittlung ein Schleitring zugeordnet ist

Es versteht sich, daß je nach der Produktionsgeschwindigkeit auch mehrere Ultraschall-Meßköpfe in rotierendem Umlauf angeordnet sein können, wobei die Anzahl der Meßköpfe und deren Rotationsgeschwindigkeit in optimaler Weise aufeinander sowie auf die Produktionsgeshwindigkeit des extrudierten Rohres abzustimmen sind.

Weiterhin kann diese Vorrichtung zur Lunkererkennung in voreilhalfter Weise in dem entsprechend vorgesohenen Moßring mit der zu der ersten Ausführungsform der Erfindung beschriebenen Wanddickenmeßeinrichtung kombiniert werden.

In der Zeichnung sind Ausführungsbeispiele der Erfindung wiedergegeben, welche nachstehend beschrieben sind. Es zeigen:
- Fig. 1: den vorderen Endbereich einer Kalibrierhülse mit Intensivkühlring und Wanddickenmeßvorrichtung im Längsschnitt.
- Fig. 2: den Gegenstand der Figur 1 in teilweisem Ouerschnitt,
- Fig. 3: ein anderes Ausführungsbeispiel der Wanddickenmeßvorrichtung gemäß Figur 1.
- Fig. 4: ein weiteres Ausführungsbeispiel der WanddickenmeßVorrichtung gemäß Figur 1.
- Fig. 5: den Meßring mit Extrusionsstrang im Schnitt.
- Fig. 6: den Meßring mit Kalibrierhülse und Extrusionsstrang im Schnitt,
- Fig. 7: den vorderen Endbereich einer Kalibrierhülse mit Intensivkühlring und Lunkererkennungsvorrichtung im Längsschnitt.

Ein ausschnittsweise angedeuteter Vakuumtank 10 ist an seinem dem Rohrwerkzeug 33 der Extruderanlage zugewandten vorderen Ende mit einer Aufnahmeplatte 11 Versohlossen. Im Vakuumtank 10 ist eine Kalibrierhülse 12 angeordnet, die das in Extrudierrichtung (Pfeil 13) ablaufende extrudierte Rohr 14 umschließt. Dazu weist die Kalibrierhülse 12 Schlitze 15 zum Ansaugen des Rohres 14 gegen ihre Innenwandung auf, wobei in dem Vakuumtank 10 ein auf die Kalibrierhülse 12 wirkendes Vakuum vorgehalten ist. Die Kalibrierhülse 12 ist an der Aufnahmeplatte 11 über einen mit dieser verbundenen Spannring 30 zentriert und gehalten, und sie ragt mit ihrem vorderen Ende 16 über die Aufnahmeplatte 11 aus dam Vakuumtank 10 hervor; auf dem vorderen Ende sitzt ein Intensivkühlring 17, der mit einer ersten Kammer 18 das vordere Ende 16 der Kalibrierhülse 12 umschließt. Auch in diesem Vorderen Ende weist die Kalibierhülse 12 Schlitze 15 beziehungsweise Ringnuten mit Verbindungsbohrungen zur ersten Kammer 18 auf, so daß über das am Intensivkühlring 17 anliegende Vakuum das extrudierte Rohr 14 nach Verlassen des Rohrwerkzeuges 33 gegen die Innenwandung des vorderen Endes 16 der Kalibrierhülse 12 gesaugt und damit in seiner Form stabilisiert wird.

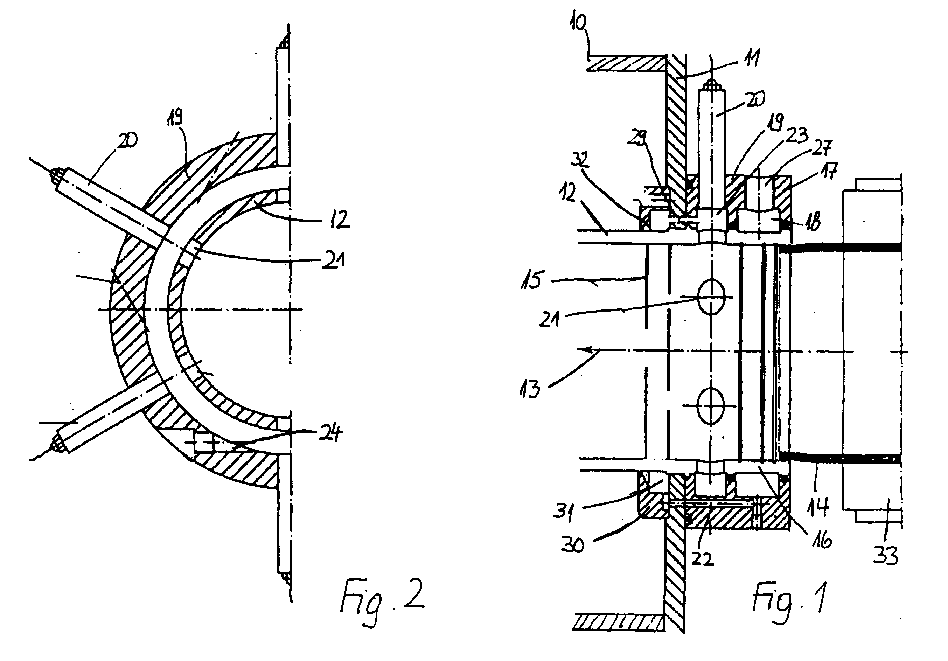

Zwischen der Aufnahmeplatte 11 und dem Intensivkühlring 17 ist ein die Kalibierhülse 12 umschließender Meßring 19 angeordnet, der über seiner Umfang Verteilt in zugeordneten Öffnungen Ultraschallmeßköpfe 20 aufweist. Der Lage der Meßköpfe 20 in dem Meßhing 19 entsprechend sind Durchbrechungen 21 in der bei dem Ausführungsbeispiel gemäß Figur 1 durchlaufenden Kalibrierhülse 12 angeordnet, so daß die Meßköpfe 20 durch die Durchbrechungen 21 des extrudierte Rohr 14 erfassen. In Axialrichtung der Kalibrierhülse 12 verlaufen durch den Meßring 19 Bobrungen 22 zur Verbindung der ersten Kammer 18 des Intensivkühlringes 17 mit dem Vakuumtank 10, wobei die Bohrungen 22 in eine im Spannring 30 ausgebildete Kammer 31 münden, und diese Kammer 31 des Spannringes 30 ist über einen Ringspalt 32 zwischen Spannring 30 und Kalibrierhülse 12 mit dem Inneren des Vakuumtanks 10 verbunden. Über die Verbindung 32, 31, 22 liegt an der ersten Kammer 18 des Intensivkühlringes 17 Vakuum an, wobei über diesen Leitungsweg auch das über radial am Intensivkühlring 17 angeordnete Wasserversorgungsanschlüsse 27 zugeführte Kühlwasser abgesaugt wird.

Der Meßring 19 umgibt die Kalibrierhülse 12 mit einer zweiten Kammer 23, die über Wasseranschlüsse odor Bohrungen 24 mit Wasser als Ankoppelmedium für die Ultraschallmessungen gefüllte ist. Die Kammer 23 ist ferner über Bohrungen 29 mit der im Spannring 30 ausgebildeten Kammer 31 verburden, so daß aufgrund der so geschaffenen Verbindung bei dem in den Figuren 1 und 2 dargestellten Ausführungsbeispiel in der Meßkammer 23 ebenfalls Vakuum herrscht.

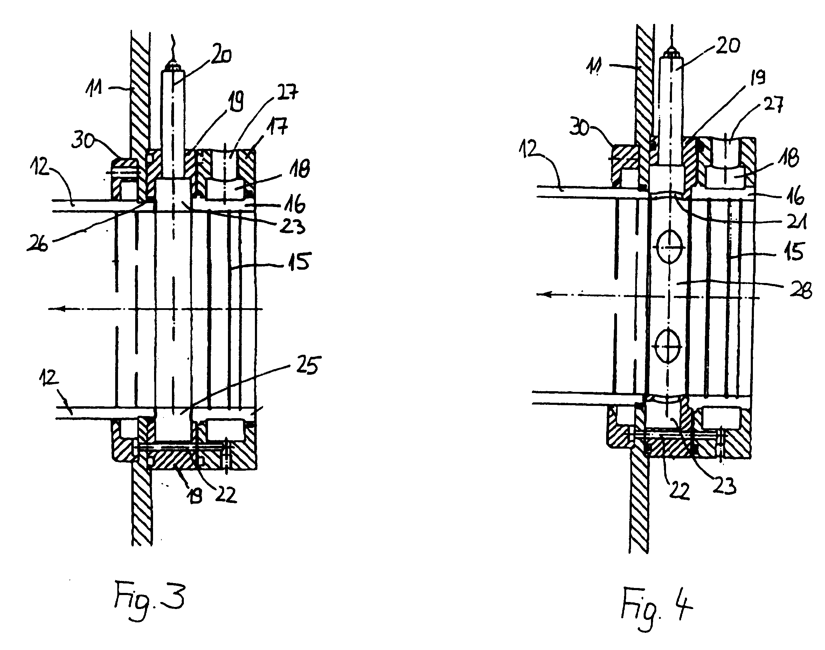

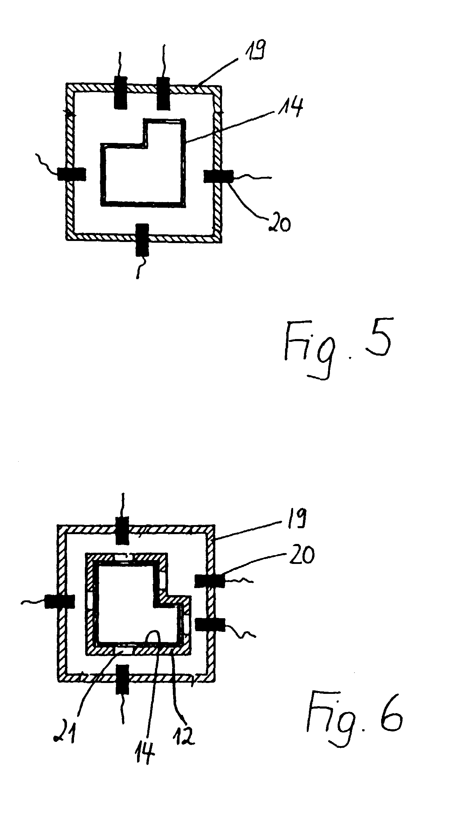

Bei den in den Figuren 3 und 4 dargestellten Ausführungsbeispielen besteht der Vorteil darin, daß die Wanddickenmessung im Bereich des Meßringes drucklos, also ohne ein anliegendes Vakuum erfolgt. Hierzu ist des Von dem Intensivkühlring 17 umschlossene vordere Ende 16 der Kalibrierhülse 12 von dem im Vakuumtank 10 angeordneten Hülsenkörper der Kalibierhülse 12 unter Ausbildung eines Zwischenraumes 25 abgetrennt, wobei der Zwischenraum 25 von dam Meßring 19 überbrückt wird. Der Meßring 19 ist übor Dichtungen 26 gegen die im Vakuumtank 10 liegende Kalibrierhülse 12 einerseits und gegen den Intensivkühlring 17 andererseits abgedichtet, so daß des im Vakuumtank 10 beziehungsweise im Intensivkühlring 17 herrschende Vakuum die Meßkammer 23 des Meßringes 19 nicht erfaßt. Bei dem in Figur 3 dargestellten Ausführungsbeispiel ist ein Meßkopf 20 über den Zwischenraum 25 reversierend umlaufend angeordnet, wobei durch Anordnung von Zu-und Ableitungsbohrungen in dem Meßring 19 dafür Sorge getragen ist, daß die Meßkammer 23 mit Wasser als Ankoppelmedium für die Ultraschallmessungen gefüllt ist. Bei dem in Figur 3 dargestellten Ausführungsbeispiel ist das extrudierte Rohr somit über die Breite des Meßringes 19 nicht abgestützt.

Eine solche Abstützung ist nun bei dem in Figur 4 dargestellten weiteren Ausführungsbeispiel der Erfindung verwirklicht, welches im Grundsatz dem in Figur 3 dargestellten Ausführungsbeispiel entspricht. Hier ist im Bereich des Meßringes ein den Zwischenraum 25 zwischen der im Vakuumtank 10 angeordneten Kalibrierhüles 12 und deren im Intensivkühlring 17 gehaltenen vorderen Ende 16 überbrückendes Distanzstück 28 angeordnet, welches wiederum Durchbrechungen 21 zum Durchlaß der vom Meßkopt 20 abgegebenen Meßimpulse aufweist. Im übrigen liegt in Übereinstimmung mit der Beschreibung zu Figur 3 auch bei dem in Figur 4 dargestellten Ausführungsbeispiel in der Meßkammer 23 kein Vakuum an.

Wie nicht weiter dargestellt, ist es aber möglich, an der Meßkammer 23 über eine gesonderte Zuleitung ein Vakuum anzulegen, um auch in dem Bereich des Meßringes 19 eine Stützung des extrudierten Rohres an dem Distanzstück 28 sicherzustellen, wobei dieses Vakuum aber wesentlich geringer ausgebildet sein kann, als das insbesondere für die Intensivkühlung im Bereich des Intensivkühlringes 17 benötigte Vakuum.

Wie in den Figuren 5 und 6 dargestellt ist, kann der Meßring 19 auch eine Rechteckform aufweisen, so daß bei dem in Figur 5 dargestellten Ausführungsbeispiel ein profilierter Extrusionsstrang 14 in seiner Wanddicke über die auf dem Umfang des Meßringes 19 angeordneten Meßköpfe 20 gemessen wird; insoweit entspricht dieser Meßring der Anordnung gemaß Figur 3 der vorstehenden Beschreibung.

Das in Figur 6 dargestellte Ausführungsbeispiel ist gegenüber Figur 5 um die ein entsprechendes Profil aufweisende Kalibrierhülse 12 ergänzt, die an den Meßstellen Durchbrechungen 21 aufweist, durch welche die in dem Meßring 19 angeordneten Meßköpfe 20 hindurchmessen.

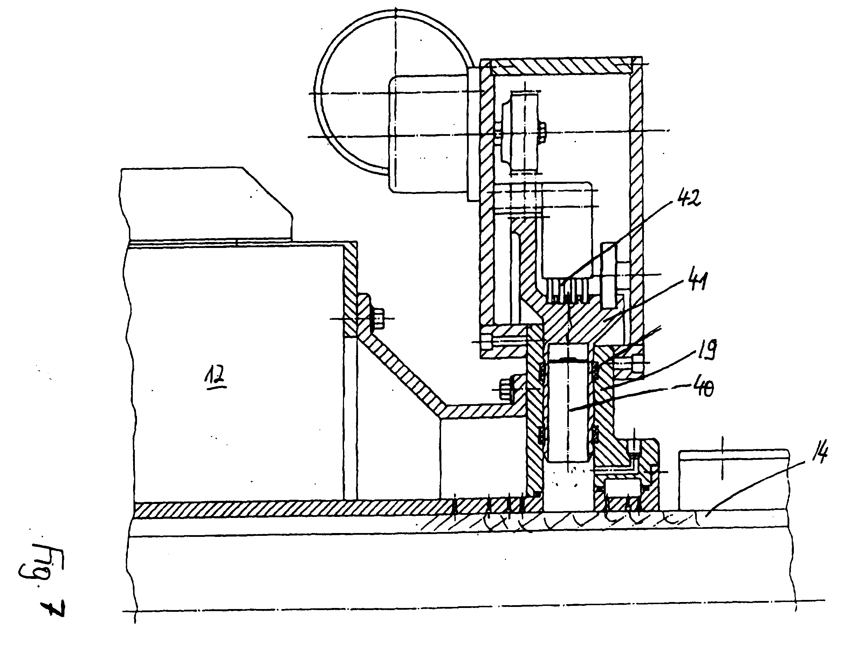

In Figur 7 ist eine Vorrichtung zur Erkennung von Lunkern in dem extrudierten Rohr dargestellt, die einen gleichen Aufbau wie des Ausführungsbeispiel gemäß Figur 3 zeigt und auch im übrigen von den Merkmalen den zu der Wanddickenmeßvorrrichtung beschriebenen Vorrichtung Gebrauch macht. So ist in dem zugeordneten Meßring 19 nun ein nach dem Ultraschallprinzip arbeitender Meßkopf 40 angeordnet, der zum Zwecke der Einrichtung einer Rotationsbewegung um das extrudierte Rohr 14 an einem rotierend eingerichteten Trägerring 41 gehalten ist; zur Übermittlung der Meßsignale ist der Trägerring 41 mit einem Schleifring 42 gekoppelt. Da im übrigen ansonsten die gleichen Bedingungen wie für die Wanddickenmeßvorrichtung beispielsweise gemäß Figur 3 gelten, kann auf Einzelheiten der Beschreibung dazu verwiesen wenden.

## Patentansprüche

1. Extrudieranlage für Kunststoffrohre, bestehend aus einem Extruder (33) und einem daran anschließenden Vakuumtank (10) mit einer darin angeordneten, in Richtung auf den Extruder (33) vor den Vakuumtank (10) vorstehenden und mit einer Wasserkühlung versehenen Kalibrierhülse (12), welche das extrudierte Rohr (14) gegen die Innenseite ibrer Wandung zieht, wobei dem vorderen Ende (16) der Kalibrierhülse (12) ein ringförmiger Kuhlraum zugeordnet ist, und eine mit einem oder mehreren radial turn extrudierten Rohr (14) ausgerichteten, nach dem Ultraschallprinzip arbeitenden Meßköpfen (20, 40) aufweisende Wanddickenmeßvorrichtung in dem vorstehenden Bereich der Kalibrierhülse (12) außerhalb des Vakuumtanks (10) angeordnet ist, dadurch gekennzeichnet, daß dem vorderen Ende (16) der Kalibrierhülse (12) ein gesonderter und zur Versorgung mit Vakuum und Wasser mit dem Vakuumtank (10) verbundener sowie zur Ausbildung einer intensiven Kühlwirkung mit einem Wasserversorgungsanschluß (27) zur direkten Zufuhr von Kuhlwasser versehener Intensivkühlring (17) zugeordnet ist und die Wanddickenmeßvorrichtung als ein die Kalibrierhülse (12) oder das extrudierte Rohr (14) mit einer Meßkammer (23) umschließender und mit Wasseranschlüssen (24) zur Befüllung der Meßkammer (23) mit Wasser als direktem Ankoppelmedium zwischen Meßkopf (20) und extrudiertem Rohr (14) versehener Meßring (19) ausgebildet ist, und daß der Meßring (19) zwischen dem Intensivkühlring (17) und dem Vakuumtank (10) angeordnet ist.

2. Extrudieranlage nach Anspruch 1. dadurch gekennzeichnet, daß in bem Meßring (19) in Axialrichtung der Kalibrierhülse (12) verlaufende Bohrungen (22) zum Anschluß des Intensivkühlrings (17) an den Vakuumtank (10) angeordnet sind.

3. Extrudieranlage nach Anspruch 2. dadurch gekennzeichnet, daß der Meßring (19) auf seinem umfang Öffnungen zur Aufnahme der Meßköpfe (20) aufweist und die Kalibrierhülse (12) auf ihrem Umfang mit zugeordneten Durchbrechungen (21) versehen ist.

4. Extrudieranlage nach Anspruch 2. dadurch gekennzeichnet, daß das vordere, in dem Intensivkühlring (17) gelegene Ende (16) der Kalibrierhülse (12) von dem Hülsenkörper der Kalibriehülse (12) unter Ausbildung eines Zwischenraumes (25) abgetrennt ist, und daß der Meßring (19) den Zwischenraum (25) übedeckend zwischen Vakuumtank (10) und Intensivkühlring (17) angeordnet ist.

5. Extrudieranlage nach Anspruch 4, dadurch gekennzeichnet, daß der Intensivkühlring (17) gegen den Meßring (19) mittels einer Dichtung vakuum- und wasserdicht abgedichtet ist.

6. Extrudieranlage nach Anspruch 5. dadurch gekennzeichnet, daß in dem Meßring (19) wenigstens ein reversierend um das extrudierte Rohr (14) umlaufender Meßkopt (20) angeordnet ist.

7. Extrudieranlage nach Anspruch 5. dadurch gekennzeichnet, daß der Meßring (19) mehrere auf seinem Umfang verteilte stationäre Meßköpfe (20) aufweist.

8. Extrudieranlage nach einem der Ansprüche 4 bis 7, dadurch gekennzeichnet, daß der vom Meßring (19) umschlossene Zwischenraum (25) mit einer gesonderten Vakuumquelle verbunden ist.

9. Extrudieranlage nach einem der Ansprüche 1 bis 8, dadurch gekennzeichnet, daß in Extrudierrichtung (Pfeil 13) nach der Kalibrierhülse (12) eine weitere Wanddickenmeßvorrichtung angeordnet ist und daß eine Auswerteeinheit zur Auswertung der Meßdaten beider Wanddickenmeßvorrichtungen vorge

10. Extrudieranlage nach einem der Ansprüche 1 bis 9. dadurch gekennzeichnet, daß der Meßring (19) eine Rechteckform zum Umgreifen eines profilierten Extrusionsstranges (14) aufweist.

11. Extrudieranlage für Kunststoffrohre, bestehend aus einem Extruder (33) und einem daran anschließenden Vakuumtank (10) mit einer darin angeordneten, in Richtung auf den Extruder (33) vor den Vakuumtank (10) vorstehenden und mit einer Wasserkühlung versehenen Kalibrierhülse (12), welche das extrudierte Rohr (14) gegen die Innenseite ihrer Wandung zieht, wobei dem vorderen Ende (16) der Kalibrierhülse (12) ein ringförmiger Kuhlraum zugeordnet ist, und eine um das extrudierte Rohr (14) rotierend umlaufende wenigstens einen nach dem Ultraschallprinzip arbeitenden Meßkopf (40) aufweisende Meßvorrichtung in dem vorstehenden Bereich der Kalibrierhülse (12) außerhalb des Vakuumtanks (10) angeordnet ist, dadurch gekennzeichnet, daß dem vorderen Ende (16) der Kalibrierhülse (12) ein gesonderter und zur Versorgung mit Vakuum und Wasser mit dem Vakuumtank (10) verbundener sowie zur Ausbildung einer intensiven Kühlwirkung mit einem Wasserversorgungsanschluß (27) zur direkten Zufuhr von Kühlwasser versehener Intensivkühlring (17) zugeordnet ist und die Wanddickenmeßvorrichtung als ein die Kalibrierhülse (12) oder das extrudierte Rohr (14) mit einer Meßkammer (23) umschließender und mit Wasseranschlüssen (24) zur Befüllung der Meßkammer (23) mit Wasser als direktem Ankoppelmedium zwischen Meßkopf (20) und extrudiertem Rohr (14) versehener Meßring (19) ausgebildet ist, und daß der Meßring (19) zwischen dem Intensivkühlring (17) und dem Vakuumtank (10) angeordnet ist und daß der wenigstens eine Meßkopf ein Ultraschall-Meßkopf (40) für die Lunkererkennung in dem extrudierten Rohr (14) ist.

12. Extrudieranlage nach Anspruch 11, dadurch gekennzeichnet, daß der Meßkopf (40) auf einem um das extrudierte Rohr (14) rotierenden Trägerring (41) angeordnet ist und daß dem rotierendem Trägerring (41) zur Signalübermittlung ein Schielfring (42) zugeordnet ist.

## Claims

1. Extruding installation for plastics pipes, consisting of an extruder (33) and a vacuum tank (10) adjacent thereto with a calibrating sleeve (12) which is disposed in the latter, protrudes in front of the vacuum tank (10) in the direction of the extruder (33), is provided with a water cooling system and draws the extruded pipe (14) against the inside of its wall, wherein an annular cooling compartment is associated with the front end (16) of the calibrating sleeve (12), and a wall thickness measuring device comprising one or more measuring heads (20, 40), which are oriented radially with respect to the extruded pipe (14) and operate according to the ultrasound principle, is disposed in the protruding region of the calibrating sleeve (12) outside of the vacuum tank (10), characterised in that a separate intensive cooling ring (17), which is connected to the vacuum tank (10) so as to be supplied with vacuum and water and, in order to develop an intensive cooling action, is provided with a water supply connection (27) for the direct feed of cooling water, is associated with the front end (16) of the calibrating sleeve (12), and the wall thickness measuring device is constructed as a measuring ring (19) which encloses the calibrating sleeve (12) or the extruded pipe (14) with a measuring chamber (23) and is provided with water connections (24) tor filling the measuring chamber (23) with water as a direct coupling medium between the measuring head (20) and the extruded pipe (14), and that the measuring ring (19) is disposed between the intensive cooling ring (17), and the vacuum tank (10).

2. Extruding installation according to claim 1, characterised in that bores (22) extending in the axial direction of the calibrating sleeve (12) are disposed in the measuring ring (19) to connect the intensive cooling ring (17) to the vacuum tank (10).

3. Extruding installation according to claim 2, characterised in that the measuring ring (19) comprises openings at its periphery for accommodating the measuring heads (20), and the calibrating sleeve (12) is provided at its periphery with associated perforations (21).

4. Extruding installation according to claim 2, characterised in that the front end (16), which is located in the intensive cooling ring (17), of the calibrating sleeve (12) is separated from the sleeve body of the calibrating sleeve (12), thereby forming an interspace (25), and that the measuring ring (19) is disposed between the vacuum tank (10) and the intensive cooling ring (17) so as to cover the interspace (25).

5. Extruding installation according to claim 4, characterised in that the intensive cooling ring (17) is sealed in relation to the measuring ring (19) by means of a seal in a vacuum-tight and water-tight manner.

6. Extruding installation according to claim 5, characterised in that at least one measuring head (20), which circuits the extruded pipe (14) in a reversing manner, is disposed in the measuring ring (19).

7. Extruding installation according to claim 5, characterised in that the measuring ring (19) comprises a plurality of stationary measuring heads (20) distributed over its periphery.

8. Extruding installation according to one of claims 4 to 7, characterised in that the interspace (25) enclosed by the measuring ring (19) is connected to a separate vacuum source.

9. Extruding installation according to one of claims 1 to 8, characterised in that another wall thickness measuring device is disposed after the calibrating sleeve (12) in the extruding direction (arrow 13), and that an evaluation unit is provided for evaluating the measurement data of the two wall thickness measuring devices.

10. Extruding installation according to one of claims 1 to 9, characterised in that the measuring ring (19) has a rectangular shape for embracing a profiled extrusion strand (14).

11. Extruding plant tor plastics pipes, consisting of an extruder (33) and a vacuum tank (10) adjacent thereto with a calibrating sleeve (12) which is disposed in the latter, protrudes in front of the vacuum tank (10) in the direction of the extruder (33), is provided with a water cooling system and draws the extruded pipe (14) against the inside of its wall, wherein an annular cooling compartment is associated with the front end (16) of the calibrating sleeve (12), and a measuring device circuiting the extruded pipe (14) in a rotating manner and comprising at least one measuring head (40), which operates according to the ultrasound principle, is disposed in the protruding region of the calibrating sleeve (12) outside of the vacuum tank (10), characterised in that a separate intensive cooling ring (17), which is connected to the vacuum tank (10) so as to be supplied with vacuum and water and, in order to develop an intensive cooling action, is provided with a water supply connection (27) for the direct feed of cooling water, is associated with the front end (16) of the calibrating sleeve (12), and the wall thickness measuring device is constructed as a measuring ring (19) which encloses the calibrating sleeve (12) or the extruded pipe (14) with a measuring chamber (23) and is provided with water connections (24) for filling the measuring chamber (23) with water as a direct coupling medium between the measuring head (20) and the extruded pipe (14), and that the measuring ring (19) is disposed between the intensive cooling ring (17) and the vacuum tank (10), and that the measuring head, of which there is at least one, is an ultrasonic measuring head (40) for detecting voids in the extruded pipe (14).

12. Extruding installation according to claim 11, characterised in that the measuring head (40) is disposed on a carrier ring (41) rotating about the extruded pipe (14), and that a slip ring (42) is associated with the rotating carrier ring (41) to transmit signals.

## Revendications

1. Installation d'extrusion pour tuyaux en plastique, comportant une extrudeuse (33) et une citerne sous vide (10) reliée à cette dernière, avec un manchon de calibrage (12) disposé dans cette citerne sous vide, dépassant de la citerne sous vide (10) dans le sens de l'extrudeuse (33), doté d'un refroidissement à eau et qui tire le tuyau extrudé (14) contre le côté intérieur de sa paroi, une chambre de refroidissement annulaire étant affectée à l'extrémité antérieure (16) du manchon de calibrage (12) et un dispositif de mesure de l'épaisseur de paroi muni d'une ou de plusieurs têtes de mesure (20,40) orientées radialement par rapport au tuyau extrudé (14) et fonctionnant selon le principe des ultrasons étant disposé dans la zone du manchon de calibrage (12) dépassant à l'extérieur de la citerne sous vide (10), caractérisée en ce qu'à l'extrémité antérieure (16) du manchon de calibrage (12) est affecté un anneau de refroidissement intensif (17) séparé, assemblé avec la citerne sous vide pour l'alimentation en vide et en eau et pour la formation d'un effet intensif de refroidissement, doté d'un raccord d'alimentation d'eau (27) pour l'arrivée directe d'eau froide, et que le dispositif de mesure de l'épaisseur de paroi est conçu comme un anneau de mesure (19) entourant le manchon de calibrage (12) ou bien le tuyau extrudé (14) avec une chambre de mesure (23) et doté de branchements d'eau (24) pour le remplissage de la chambre de mesure (23) avec de l'eau comme milieu direct de couplage entre la tête de mesure et le tuyau extrudé (14 et en ce qu'un anneau de mesure (19) est disposé entre l'anneau de refroidissement intensif (17) et la citerne sous vide (10).

2. Installation d'extrusion selon la revendication 1, caractérisée en ce que des alésages (22) dirigés dans le sens axial du manchon de calibrage (12) sont disposés dans l'anneau de mesure (19) pour le raccordement de l'anneau de refroidissement intensif (17) à la citerne sous vide (10).

3. Installation d'extrusion selon la revendication 2, caractérisée en ce que l'anneau de mesure (19) présente sur son pourtour des ouvertures pour loger les têtes de mesure (20) et en ce que le manchon de calibrage (12) est doté sur son pourtour de découpures (21) correspondantes.

4. Installation d'extrusion selon la revendication 2, caractérisée en ce que l'extrémité antérieure du manchon de calibrage (12) située dans l'anneau de refroidissement intensif (17) est séparée du corps du manchon de calibrage (12) en formant un espace libre (25) et en ce que l'anneau de mesure (19) est disposé entre la citerne sous vide (10) et l'anneau de refroidissement intensif (17) tout en recouvrant l'espace libre (25).

5. Installation d'extrusion selon la revendication 4, caractérisée en ce que l'anneau de refroidissement intensif (17) est rendu étanche au vide et à l'eau contre l'anneau de mesure (19) à l'aide d'un joint d'étanchéité.

6. Installation d'extrusion selon la revendication 5, caractérisée en ce qu'au moins une tête de mesure (20) est disposée dans l'anneau de mesure (19) en tournant on sens inverse du tuyau extrudé (14).

7. Installation d'extrusion selon la revendication 5, caractérisée en ce que l'anneau de mesure (19) présente plusieurs têtes de mesure (20) stationnaires réparties sur son pourtour.

8. Installation d'extrusion selon l'une quelconque des revendications 4 à 7, caractérisée en ce que l'espace libre (25) entouré par l'anneau de mesure (19) est relié à une source séparée de vide.

9. Installation d'extrusion selon l'une quelconque des revendications 1 à 8, caractérisée en ce qu'un autre dispositif de mesure de l'épaisseur de paroi est disposé dans le sens d'extrusion (flèche 13) après le manchon de calibrage (12) et en ce qu'une unité d'analyse est prévue pour l'analyse des données de mesure des deux dispositifs de mesure de l'épaisseur de paroi.

10. Installation d'extrusion selon l'une quelconque des revendications 1 à 9, caractérisée en ce que l'anneau de mesure (19) présente une forme carrée pour envelopper une barre d'extrusion (14) profilée.

11. Installation d'extrusion pour tuyaux en plastique, comportant une extrudeuse (33) et une citerne sous vide (10) reliée à cette dernière, avec un manchon de calibrage (12) disposé dans cette citerne sous vide, dépassant de la citerne sous vide (10) dans le sens de l'extrudeuse (33), doté d'un refroidissement à eau et qui tire le tuyau extrudé (14) contre le côté intérieur de sa paroi, une chambre de refroidissement annulaire étant affectée à l'extrémité antérieure (16) du manchon de calibrage (12) et un dispositif de mesure muni d'au moins une tête de mesure (40) tournant autour du tuyau extrudé (14) et fonctionnant selon le principe des ultrasons étant disposé dans la zone du manchon de calibrage (12) dépassant à l'extérieur de la citerne sous vide (10), caractérisée en ce qu'à l'extrémité antérieure (16) du manchon de calibrage (12) est affecté un anneau de refroidissement intensif (17) séparé, assemblé avec la citerne sous vide pour l'alimentation en vide et en eau et pour la formation d'un effet intensif de refroidissement doté d'un raccord d'alimentation d'eau (27) pour l'arrivée directe d'eau froide, et que le dispositif de mesure de l'épaisseur de paroi est conçu comme un anneau de mesure (19) entourant le manchon de calibrage (12), ou bien le tuyau extrudé (14) avec une chambre de mesure (23) et doté de branchements d'eau (24) pour le remplissage de la chambre de mesure (23) avec de l'eau comme milieu direct de couplage entre la tête de mesure et le tuyau extrudé (14, et en ce qu'un anneau de mesure (19) est disposé entre l'anneau de refroidissement intensif (17) et la citerne sous vide (10), et en ce que la tête de mesure au nombre d'au moins une est une tête de mesure à ultrasons (40) pour la détection de bulles dans le tuyau extrudé.

12. Installation d'extrusion selon la revendication 11, caractérisée en ce que la tête de mesure (40) est disposée sur un anneau support (41) tournant autour du tuyau extrudé (14) et en ce qu'une bague collectrice (42) est affectée à l'anneau support(41) en rotation pour la transmission du signal.
